# EUROPÄISCHE PATENTANMELDUNG

(11) **EP 1 240 990 A1**
(43) Veröffentlichungstag der Anmeldung: **18.09.2002**
(21) Anmeldenummer: 02002818.9
(22) Anmeldetag: 08.02.2002
(51) Int. Cl.: B29C 41/22, B29C 41/18, B29C 41/04, B44F 5/00, B44C 5/04, B29C 41/46, B29C 41/52

(54) **Formaufschmelzverfahren**

(30) Priorität: 15.03.2001 DE 10112363
(71) Anmelder: Bayerische Motoren Werke Aktiengesellschaft, 80809 München (DE)
(72) Erfinder: Kurth, Gerd, 84098 Hohenthann (DE); Vollmer, Guido, 80637 München (DE)

(57) **Zusammenfassung**

Mit einem Formaufschmelzverfahren zum Herstellen von Kunststoff-Formteilen (7), bei dem ein flocken- oder pulverförmiges Kunststoffmaterial (4.1,4.2) in einen Formbehälter (5) eingefüllt und anschließend unter Wärmeeinwirkung und zumindest einachsiger Bewegungssteuerung des Formbehälters (5) aufgeschmolzen und im wesentlichen gleichförmig über die Formfläche (6) des Formbehälters (5) verteilt wird, werden erfindungsgemäß mehrfarbige Formteile (7) mit scharfen, verlaufsfreien Farbgrenzen dadurch hergestellt, dass das Kunststoffmaterial aus Partikeln (4.1,4.2) unterschiedlicher Färbung und je nach Färbung unterschiedlicher Schmelztemperatur gemischt und im Formbehälter (5) bis unterhalb des niedrigviskosen Schmelzzustands der höher schmelzenden Farbpartikel erwärmt wird, oder dass materialgleiche Kunststoffpartikel (4.1,4.2) unterschiedlicher Färbung verwendet und diese im Formbehälter (5) auf eine Schmelztemperatur innerhalb des höherviskosen Schmelzbereichs der Kunststoffpartikel erwärmt werden.

## Beschreibung

Die Erfindung bezieht sich auf ein Formaufschmelzverfahren zum Herstellen von Kunststoff-Formteilen, nach dem Oberbegriff des Patentanspruchs 1.

Bei bekannten Formaufschmelzverfahren dieser Art, wie sie etwa zur Herstellung von Kunststoff-Formfolien für die Cockpit-Innenverkleidung von Kraftfahrzeugen Verwendung finden, wird ein thermoplastisches, flocken- oder pulverförmiges Kunststoffmaterial unter Wärmeeinwirkung in einem Formbehälter bis zum niedrigviskosen Zustand aufgeschmolzen. und die so entstehende Schmelzflüssigkeit durch mechanische Bewegung des Formbehälters durchmischt und gleichförmig über die Formfläche des Formbehälters verteilt, woraufhin der Formbehälter abgekühlt und das fertige Formteil entnommen wird. Wegen des Durchmischungseffekts der Schmelzflüssigkeit im Formbehälter lassen sich nach dieser sogenannten Slush-Methode zwangsläufig nur einfarbige Formteile herstellen, während aus ästhetischen Gründen, aber auch um bei hellen Cockpit-Innenverkleidungen störende Spiegelungen der Innenverkleidung an der Windschutzscheibe zu verhindern, häufig mehrfarbige Formteile, etwa solche mit dunklen Farbsprenkeln auf hellem Hintergrund, gefordert werden.

Aufgabe der Erfindung ist es, ein Formaufschmelzverfahren der eingangs genannten Art anzugeben, mit welchem auf fertigungstechnisch einfache Weise mehrfarbige Formteile herstellbar sind.

Diese Aufgabe wird erfindungsgemäß durch das im Patentanspruch 1 bzw. 2 gekennzeichnete Verfahren gelöst.

Die Erfindung basiert auf der Überlegung, dass die mit der üblichen Slush-Methode unvermeidbare, homogene Färbung des Formteils bei Verwendung farblich unterschiedlicher Kunststoffpartikel dadurch unterbunden werden kann, dass zumindest eine der Partikelarten während der Aufschmelzphase im höherviskosen Zustand gehalten wird. Wie sich bei der praktischen Erprobung des erfindungsgemäßen Verfahrens gezeigt hat, ist es auf diese Weise sogar gelungen, Farbverläufe zwischen den unterschiedlichen Partikelfarben zu verhindern und somit mehrfarbige Formteile mit klaren Farbgrenzen zu erhalten. Nach der ersten Variante der Erfindung wird dies dadurch erreicht, dass die verschiedenfarbigen Kunststoffpartikel eine je nach Färbung unterschiedliche Schmelztemperatur besitzen und der Formbehälter nur soweit erwärmt wird, dass die höher schmelzenden Farbpartikel unterhalb des niedrigviskosen Schmelzzustands verbleiben, während nach der zweiten Variante der Erfindung materialgleiche Kunststoffpartikel unterschiedlicher Färbung verwendet werden und das gesamte Partikelgemisch in der Aufschmelzphase nicht über den zähflüssigen Schmelzzustand erwärmt wird.

Die farbliche Gestaltung des Formteils lässt sich durch entsprechende Wahl des Mischungsverhältnisses der verschiedenfarbigen Kunststoffpartikel, vorzugsweise aber auch zusätzlich durch unterschiedliche Partikelgrößen beeinflussen. Im Rahmen bevorzugter Ausgestaltungen der Erfindung werden weitere Sondereffekte erzielt, etwa Glitzereffekte durch zusätzliche Einlagerung von nicht-schmelzenden Partikelarten, oder besondere Beleuchtungseffekte, etwa nach Art einer gedämpft leuchtenden Lichtfläche durch Zumischung von transluzenten Kunststoffpartikeln und Anordnung einer Lichtquelle auf der Rückseite des Formteils, z.B. der Cockpit-Formfolie.

Die Erfindung wird nunmehr anhand eines in den Figuren dargestellten Ausführungsbeispieles näher erläutert. Diese zeigen in stark schematisierter Darstellung:
- **Fig. 1a-e**: ein Formaufschmelzverfahren nach der Erfindung in aufeinanderfolgenden Verfahrensschritten; und
- **Fig.2**: eine vielfach vergrößerte Teilansicht eines erfindungsgemäß hergestellten Mehrfarben-Formteils in Schwarz-Weißdarstellung.

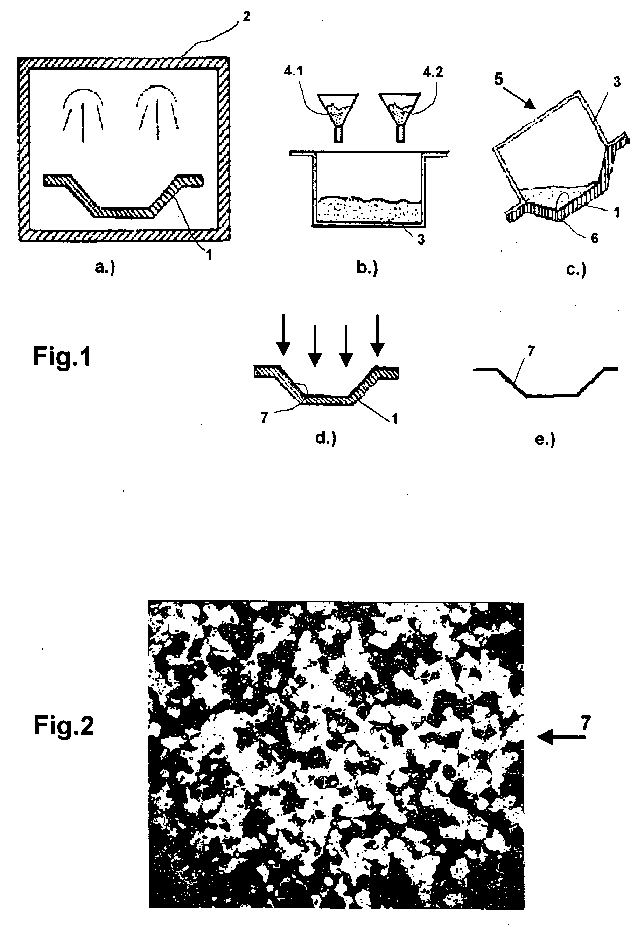

Gemäß Fig. 1 wird zur Herstellung einer mehrfarbigen Formfolie 7 nach dem Formaufschmelzverfahren zunächst ein Formwerkzeug 1 in einem Ofen 2 aufgeheizt (Fig. 1a) und ein Pulverkasten 3 mit verschiedenfarbigen, flocken- oder pulverförmigen Kunststoffpartikeln 4.1 und 4.2 aus einem thermoplastischen Kunststoffmaterial befüllt (Fig. 1 b). Anschließend werden das Formwerkzeug 1 und der Pulverkasten 3 zu einem Formbehälter 5 zusammengebaut, welcher programmgesteuert mehrmals in unterschiedlichen Richtungen hin- und herbewegt wird (Fig. 1c), so dass die Kunststoffpartikel 4 an der erhitzten Formfläche 6 des Formwerkzeugs 1 schichtweise und mit gleichmäßiger Schichtdicke aufschmelzen. Nachfolgend wird das Formwerkzeug 1 gekühlt (Fig. 1d), so dass die an der Formfläche 6 aufgeschmolzene Kunststoffschicht zu einer Formfolie 7 erstarrt, die aus dem Formwerkzeug 1 entnommen werden kann (Fig. 1e).

Die farblich unterschiedlichen Kunststoffpartikel 4.1 und 4.2 bestehen entweder aus dem gleichen Kunststoffmaterial, etwa einem thermoplastischen Polyurethan, welches in der Aufschmelzphase (Fig. 1c) üblicherweise auf etwa 200°C und damit in einen sehr niedrigviskosen Zustand erhitzt, erfindungsgemäß aber nicht bis zu diesem Schmelzzustand, sondern nur auf etwa 160°C erwärmt wird. Oder die Partikelkomponenten 4.1 und 4.2 bestehen aus Kunststoffmaterialien mit unterschiedlichen Schmelztemperaturen und werden in der Aufschmelzphase auf ein Temperaturniveau erwärmt, bei dem sich die eine Partikelart bereits im niedrigstviskosen, die andere aber noch im höherviskosen Schmelzzustand befindet. Auf diese Weise lassen sich mehrfarbige Formteile 7 mit scharfen, verlaufsfreien Farbgrenzen erzeugen, wie aus der in Fig. 2 in vielfach vergrößertem Maßstab ausschnittsweise gezeigten Schwarz-Weißdarstellung eines erfindungsgemäß hergestellten Formteils 7 ersichtlich ist.

Die Farbgestaltung des Formteils 7 lässt sich durch entsprechende Wahl des Mischungsverhältnisses und/oder der Korngrößen der Partikelkomponenten 4.1 und 4.2 variieren.

Im Rahmen der Erfindung kann für eine der farblich unterschiedlichen Partikelarten 4.1 oder 4.2 auch ein transluzentes Kunststoffmaterial verwendet werden, so dass sich z.B. beim Einsatz einer Formfolie 7 im Cockpitbereich eines Kraftfahrzeugs und Anordnung einer Lichtquelle auf der Folienrückseite ein gedämpfter Beleuchtungseffekt mit flächenhaft diskret verteilten Leuchttüpfeln ergibt. Zur Erzielung weiterer Sonder-, z.B. Glitzereffekte lassen sich den Kunststoffpartikeln 4.1 und 4.2 in der Befüllphase (Fig. 1b) zusätzlich auch nicht-schmelzende, etwa metallische Partikelkomponenten beimischen.

## Patentansprüche

1. Formaufschmelzverfahren zum Herstellen von Kunststoff-Formteilen, bei dem ein flocken- oder pulverförmiges Kunststoffmaterial in einen Formbehälter eingefüllt und anschließend unter Wärmeeinwirkung und zumindest einachsiger Bewegungssteuerung des Formbehälters aufgeschmolzen und im wesentlichen gleichförmig über die Formfläche des Formbehälters verteilt wird, **dadurch gekennzeichnet, dass**
das Kunststoffmaterial aus Partikeln unterschiedlicher Färbung und je nach Färbung unterschiedlicher Schmelztemperatur gemischt und im Formbehälter bis unterhalb des niedrigviskosen Schmelzzustands der höherschmelzenden Farbpartikel erwärmt wird.

2. Formaufschmelzverfahren zum Herstellen von Kunststoff-Formteilen, bei dem ein flocken- oder pulverförmiges Kunststoffmaterial in einen Formbehälter eingefüllt und anschließend unter Wärmeeinwirkung und zumindest einachsiger Bewegungssteuerung des Formbehälters aufgeschmolzen und im wesentlichen gleichförmig über die Formfläche des Formbehälters verteilt wird, **dadurch gekennzeichnet, dass**
das Kunststoffmaterial aus Partikeln unterschiedlicher Färbung gemischt und im Formbehälter auf eine Schmelztemperatur innerhalb des höherviskosen Schmelzzustands der Kunststoffpartikel erwärmt wird.

3. Formaufschmelzverfahren nach Anspruch 1 oder 2, **dadurch gekennzeichnet, dass**
die Kunststoffpartikel eine farbabhängig unterschiedliche Partikelgröße aufweisen.

4. Formaufschmelzverfahren nach einem der vorhergehenden Ansprüche, **dadurch gekennzeichnet, dass**
für eine Partikelart ein transluzentes, thermoplastisches Kunststoffmaterial verwendet wird.

5. Formaufschmelzverfahren nach einem der vorhergehenden Ansprüche, **dadurch gekennzeichnet, dass**
dem Kunststoffmaterial zusätzlich eine nicht-schmelzende Partikelkomponente beigemischt wird.
